# EUROPÄISCHE PATENTSCHRIFT

(11) **EP 4 344 520 B1**
(45) Veröffentlichungstag und Bekanntmachung des Hinweises auf die Patenterteilung: **02.07.2025**
(21) Anmeldenummer: 23196760.5
(22) Anmeldetag: 12.09.2023
(51) Int. Cl.: A01B 59/00, A01B 63/10, F15B 13/00, A01B 59/06

(54) **ANORDNUNG ZUR STEUERUNG EINES HYDRAULISCHEN DREIPUNKT-KRAFTHEBERS**
CONTROL ARRANGEMENT FOR A HYDRAULIC THREE-POINT POWER LIFT
DISPOSITIF DE COMMANDE D'UN RELEVAGE HYDRAULIQUE À TROIS POINTS

(30) Priorität: 28.09.2022 DE 102022124970
(43) Veröffentlichungstag der Anmeldung: 03.04.2024
(73) Patentinhaber: Deere & Company, Moline, IL 61265 (US)
(72) Erfinder: Billich, Manuel, Mannheim (DE)
(74) Vertreter: Dehnhardt, Florian Christopher

(56) Entgegenhaltungen:
- EP-A1- 1 496 009
- EP-A2- 0 348 854
- US-A1- 2012 205 563
- US-A1- 2018 209 450

## Beschreibung

Die Erfindung betrifft eine Anordnung zur Steuerung eines hydraulischen Dreipunkt-Krafthebers, umfassend einen Hydraulikzylinder mit einer Arbeitskammer, die zur Veränderung der Hubstellung eines von dem hydraulischen Dreipunkt-Kraftheber umfassten Unterlenkers mit unter Druck stehender Hydraulikflüssigkeit beaufschlagbar ist, sowie mit der Arbeitskammer kommunizierende erste und zweite Sitzventile, wobei das erste Sitzventil zur Herstellung einer Zulaufverbindung mit einer Hochdruckquelle und das zweite Sitzventil zur Herstellung einer Rücklaufverbindung mit einem Hydraulikreservoir ausgebildet ist.

Die Verwendung hydraulischer Dreipunkt-Kraftheber stellt vor allem bei landwirtschaftlichen Traktoren eine zum Betrieb unterschiedlichster Anbau- bzw. Bodenbearbeitungsgeräte gängige Maßnahme dar. Üblicherweise umfasst der im Heck- oder Frontbereich des landwirtschaftlichen Traktors befindliche Dreipunkt-Kraftheber linke und rechte Unterlenker, die an einem Chassisteil des landwirtschaftlichen Traktors derart angelenkt sind, dass sich ein an zugehörigen Kupplungsschnittstellen der Unterlenker angebrachtes Anbaugerät mittels eines hydraulischen Hubwerks gezielt anheben und absenken lässt. Neben den beiden Unterlenkern ist weiterhin ein zentraler Oberlenker vorgesehen, der der Führung des Anbaugeräts beim Heben und Senken dient und sich über eine weitere Kupplungsschnittstelle daran einhängen lässt. Hierbei weist das hydraulische Hubwerk mindestens einen Hydraulikzylinder auf, mittels dessen sich über eine starre Welle drehfest miteinander verbundene linke und rechte Hebelarme verschwenken lassen, an deren freien Enden wiederum die beiden Unterlenker über jeweilige Hubstreben angelenkt sind.

Die Betätigung des Hydraulikzylinders erfolgt auf Veranlassung einer elektrisch steuerbaren Ventilanordnung, die ein aus einer Hochdruckpumpe mit Hydraulikflüssigkeit gespeistes erstes Sitzventil zur Druckbeaufschlagung einer Arbeitskammer des Hydraulikzylinders sowie ein zur Druckentlastung der Arbeitskammer vorgesehenes zweites Sitzventil aufweist, wobei das zweite Sitzventil in ein Hydraulikreservoir mündet. Mit anderen Worten dient das erste Sitzventil dem Anheben, das zweite Sitzventil dem Absenken der Unterlenker des Dreipunkt-Krafthebers.

Eine derartige Anordnung ist beispielsweise aus der EP 0 348 854 A1 bekannt, wobei diese zur Ansteuerung eines einfachwirkenden Hydraulikzylinders dient. Die Verwendung eines einfachwirkenden Hydraulikzylinders führt dazu, dass der seitens eines Anbaugeräts auf den Untergrund ausgeübte Anpressdruck in erster Linie von dessen Gewicht bestimmt wird, sodass es bei gewissen landwirtschaftlichen Anwendungen, wie beispielsweise beim Grubbern oder Pflügen, abhängig von den Bodenverhältnissen zu unerwünschten Variationen des Bodenbearbeitungsergebnisses kommen kann.

Weitere Anordnungen zur Steuerung eines hydraulischen Dreipunkt-Krafthebers oder eines hydraulischen Zylinders sind aus den Druckschriften EP 1 496 009 A1, US 2018/209450 A1 und US 2012/205563 A1 bekannt.

Angesichts dessen ist es Aufgabe der vorliegenden Erfindung, eine Anordnung zur Steuerung eines hydraulischen Dreipunkt-Krafthebers der eingangs genannten Art hinsichtlich der Erzielung eines gleichmäßigen Bodenbearbeitungsergebnisses weiterzubilden.

Diese Aufgabe wird durch eine Anordnung zur Steuerung eines hydraulischen Dreipunkt-Krafthebers mit den Merkmalen des Patentanspruchs 1 gelöst.

Die Anordnung zur Steuerung eines hydraulischen Dreipunkt-Krafthebers umfasst einen Hydraulikzylinder mit einer Arbeitskammer, die zur Veränderung der Hubstellung eines von dem hydraulischen Dreipunkt-Kraftheber umfassten Unterlenkers mit unter Druck stehender Hydraulikflüssigkeit beaufschlagbar ist, sowie mit der Arbeitskammer kommunizierende erste und zweite Sitzventile, wobei das erste Sitzventil zur Herstellung einer Zulaufverbindung mit einer Hochdruckquelle und das zweite Sitzventil zur Herstellung einer Rücklaufverbindung mit einem Hydraulikreservoir ausgebildet ist. Hierbei handelt es sich um einen doppeltwirkenden Hydraulikzylinder mit einer weiteren Arbeitskammer, die mit einer Steuerventilanordnung verbunden ist, mittels derer in der weiteren Arbeitskammer ein vorgegebener Zieldruck einstellbar ist.

Durch Verwendung eines doppeltwirkenden Hydraulikzylinders sowie entsprechende Vorgabe des Zieldrucks ist es möglich, eine nach unten wirkende Kraft auf den Unterlenker auszuüben, falls das zweite Sitzventil sich in seiner geöffneten Stellung befindet. Dies erlaubt es bei gewissen landwirtschaftlichen Anwendungen, wie beispielsweise beim Grubbern oder Pflügen, den seitens des Anbaugeräts ausgeübten Anpressdruck gezielt zu erhöhen, sofern das Gewicht des Anbaugeräts zur Erzielung eines gewünschten Bodenbearbeitungsergebnisses alleine nicht ausreichend ist. Ebenfalls denkbar ist es, durch geeignete Vorgabe bzw. Variation des Zieldrucks das Anbaugerät entlang einer definierten Oberflächenkontur zu führen sowie einer dabei auftretenden Neigung des Anbaugeräts zum "Aufschwimmen" entgegenzuwirken. Dies ist zum Beispiel beim Verteilen von Erntegut in einem Flachsilo oder beim Räumen von Schnee mittels eines Schiebeschilds von Bedeutung.

Vorteilhafte Weiterbildungen der erfindungsgemäßen Anordnung gehen aus den Unteransprüchen hervor.

Entsprechend einer beispielhaften Ausgestaltung der Steuerventilanordnung kann diese ein 3/2-Wege-Pilotventil mit einem Auslass zur Bereitstellung eines dem vorgegebenen Zieldruck entsprechenden Stelldrucks aufweisen, wobei das 3/2-Wege-Pilotventil zur Bereitstellung des dem vorgegebenen Zieldruck entsprechenden Stelldrucks mittels eines elektrischen Aktors in eine den Auslass mit der Hochdruckquelle verbindende erste Stellung und durch Rückführung des Stelldrucks oder des in der weiteren Arbeitskammer hervorgerufenen Arbeitsdrucks über einen Steuereingang in entgegengesetzter Ventilbetätigungsrichtung in eine den Auslass mit dem Hydraulikreservoir verbindende zweite Stellung drängbar ist. Die Ansteuerung des elektrischen Aktors erfolgt auf Veranlassung eines dem gewünschten Zieldruck entsprechenden Aktorsignals. Soll der doppeltwirkende Hydraulikzylinder einfachwirkend arbeiten, bleibt der elektrische Aktor hingegen inaktiv. Dadurch wird die weitere Arbeitskammer des Hydraulikzylinders unmittelbar mit dem Hydraulikreservoir verbunden. Gleiches gilt für den Fall, dass das erste Sitzventil geöffnet oder beide Sitzventile geschlossen sind, um zu verhindern, dass der Hydraulikzylinder blockiert wird bzw. es zu einem unkontrollierten Druckanstieg bzw. -aufbau in der weiteren Arbeitskammer.

Im einfachsten Fall kann der am Auslass des 3/2-Wege-Pilotventils bereitgestellte Stelldruck zur unmittelbaren Druckbeaufschlagung der weiteren Arbeitskammer des Hydraulikzylinders dienen. Zur Erzielung ausreichend hoher Verfahrgeschwindigkeiten des Hydraulikzylinders muss dieses entsprechend hohe Durchflussraten zulassen, was letztlich zu einer Ventilbauweise mit vergleichsweise großen Abmessungen wie auch zu einer erhöhten Leistung des zu seiner Betätigung erforderlichen elektrischen Aktors führt.

Im Hinblick auf eine kosten- und bauraumoptimierte Umsetzung der Steuerventilanordnung besteht daher die Möglichkeit, dass ein 3/2-Wege-Hauptventil vorgesehen ist, das einen mit der weiteren Arbeitskammer des Hydraulikzylinders kommunizierenden weiteren Auslass aufweist, wobei mittels des von dem 3/2-Wege-Pilotventil bereitgestellten Stelldrucks das 3/2-Wege-Hauptventil über einen ersten Steuereingang in eine den weiteren Auslass mit der Hochdruckquelle verbindende erste Stellung und durch Rückführung des in der Ringkammer hervorgerufenen Arbeitsdrucks über einen zweiten Steuereingang in entgegengesetzter Ventilbetätigungsrichtung in eine den weiteren Auslass mit dem Hydraulikreservoir verbindende zweite Stellung drängbar ist. Mit anderen Worten dient das mit dem elektrischen Aktor ausgestattete 3/2-Wege-Pilotventil hier lediglich der Vorsteuerung des 3/2-Wege-Hauptventils, sodass an ersteres bezüglich der zu erzielenden Durchflussraten keine besonderen Anforderungen gestellt werden. Das 3/2-Wege-Pilotventil fällt daher vergleichsweise kompakt bzw. kostengünstig aus. Gleiches gilt für das 3/2-Wege-Hauptventil, da dieses über die beiden Steuereingänge auf rein hydraulischem Wege betätigt wird.

Durch die Rückführung des Stelldrucks bzw. des in der weiteren Arbeitskammer hervorgerufenen Arbeitsdrucks wird ein Regelkreis gebildet, in dem sich selbsttätig ein dem jeweiligen Aktorsignal entsprechender Zieldruck einstellt. Eine aufwändige aktive elektrische Druckregelung erübrigt sich damit.

Zur Verwirklichung einer Auflagedrucksteuerung kann ferner vorgesehen sein, dass die Steuerventilanordnung ein 4/2-Wegeventil umfasst, mittels dessen der Auslass des 3/2-Wege-Pilotventils statt mit dem ersten Steuereingang des 3/2-Wege-Hauptventils mit der Arbeitskammer des Hydraulikzylinders sowie zugleich der erste Steuereingang des 3/2-Wege-Hauptventils statt mit dem Auslass des 3/2-Wege-Pilotventils mit dem Hydraulikreservoir verbindbar ist. Durch Erhöhung des Arbeitsdrucks in der Arbeitskammer des Hydraulikzylinders lässt sich der Auflagedruck, der mittels eines an dem Dreipunkt-Kraftheber angebrachten Anbaugeräts auf den Untergrund ausgeübt wird, gezielt reduzieren, was zum Beispiel bei Mähwerken gewünscht ist und derzeit meist auf rein mechanischem Wege mittels entsprechender Federanordnungen oder dergleichen erfolgt.

Des Weiteren kann jedem der beiden Sitzventile bezüglich seiner jeweiligen Durchflussrichtung ein Druckkompensationsventil vorgeschaltet sein. Auf diese Weise ist gewährleistet, dass der durch die Sitzventile hindurchtretende Volumenstrom der Hydraulikflüssigkeit und damit die Verfahrgeschwindigkeit des Hydraulikzylinders im Wesentlichen konstant bleibt und ausschließlich vom momentanen Betätigungszustand des betreffenden Sitzventils abhängt.

Das Druckkompensationsventil ist insbesondere durch ein Druckregelventil gebildet, das einen am Sitzventil auslassseitig anliegenden Hydraulikdruck mit einem an diesem einlassseitig anliegenden Hydraulikdruck vergleicht und auf einen festen Differenzdruck einstellt. Druckkompensationsventil und Sitzventil können hierbei in eine gemeinsame Ventilbaugruppe integriert sein.

Die erfindungsgemäße Anordnung zur Steuerung eines hydraulischen Dreipunkt-Krafthebers wird im Folgenden anhand der Zeichnungen näher beschrieben. Dabei beziehen sich identische Bezugszeichen auf übereinstimmende oder bezüglich ihrer Funktion vergleichbare Komponenten. Es zeigen:
- Fig. 1: ein schematisch dargestelltes Ausführungsbeispiel der erfindungsgemäßen Anordnung zur Steuerung eines hydraulischen Dreipunkt-Krafthebers,
- Fig. 2: eine erste Variante des in Fig. 1 dargestellten Ausführungsbeispiels, und
- Fig. 3: eine zweite Variante des in Fig. 1 dargestellten Ausführungsbeispiels.

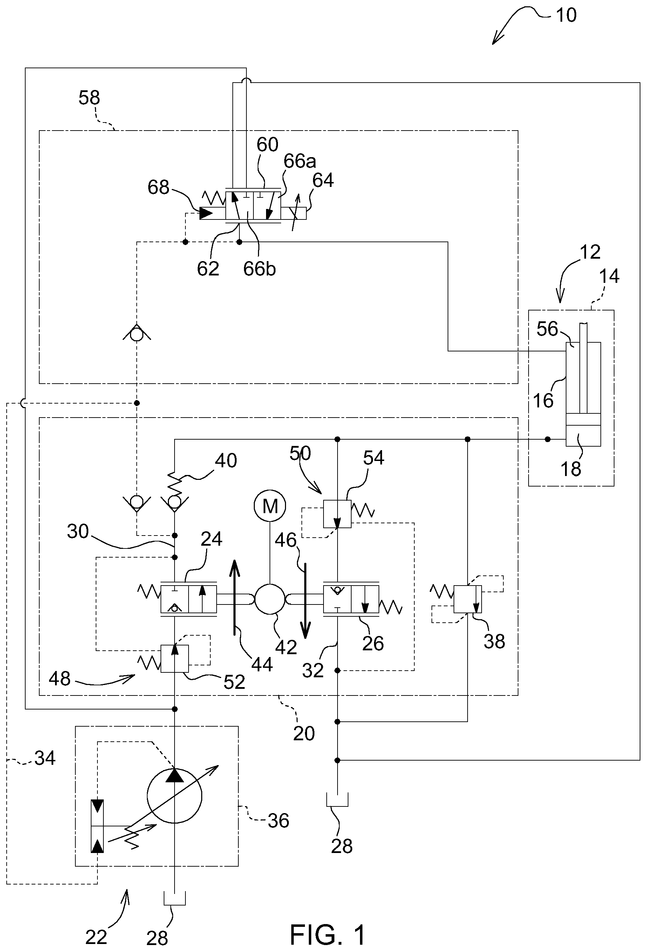

Fig. 1 zeigt ein schematisch dargestelltes Ausführungsbeispiel der erfindungsgemäßen Anordnung 10 zur Steuerung eines hydraulischen Dreipunkt-Krafthebers 12.

Der nicht näher dargestellte Dreipunkt-Kraftheber 12 ist von konventioneller Bauart und umfasst linke und rechte Unterlenker, die an einem Chassisteil eines (nicht gezeigten) landwirtschaftlichen Traktors derart angelenkt sind, dass sich ein an zugehörigen Kupplungsschnittstellen der Unterlenker angebrachtes Anbaugerät mittels eines hydraulischen Hubwerks 14 gezielt anheben und absenken lässt. Neben den beiden Unterlenkern ist weiterhin ein zentraler Oberlenker vorgesehen, der der Führung des Anbaugeräts beim Heben und Senken dient und sich über eine weitere Kupplungsschnittstelle daran einhängen lässt. Der Dreipunkt-Kraftheber 12 befindet sich im Heck- oder Frontbereich des landwirtschaftlichen Traktors.

Das hydraulische Hubwerk 14 weist linke und rechte Hydraulikzylinder 16 auf, mittels derer sich über eine starre Welle drehfest miteinander verbundene linke und rechte Hebelarme verschwenken lassen, an deren freien Enden wiederum die beiden Unterlenker über jeweilige Hubstreben angelenkt sind.

Aus Gründen der Übersichtlichkeit ist in Fig. 1 lediglich ein einzelner der beiden Hydraulikzylinder 16 wiedergegeben, wobei diese jeweils eine erste Arbeitskammer 18 (sog. Hebekammer) aufweisen, die zur Veränderung der Hubstellung der Unterlenker mit unter Druck stehender Hydraulikflüssigkeit beaufschlagbar ist.

Genauer gesagt erfolgt die Betätigung der Hydraulikzylinder 16 auf Veranlassung einer elektrisch steuerbaren Ventilanordnung 20, die ein aus einer Hochdruckquelle 22 des landwirtschaftlichen Traktors mit Hydraulikflüssigkeit gespeistes erstes Sitzventil 24 zur Druckbeaufschlagung der hydraulisch parallel verschalteten ersten Arbeitskammern 18 sowie ein zur Druckentlastung der ersten Arbeitskammern 18 vorgesehenes zweites Sitzventil 26 aufweist, wobei das zweite Sitzventil 26 in ein Hydraulikreservoir 28 mündet. Somit dient das mit den ersten Arbeitskammern 18 kommunizierende erste Sitzventil 24 durch Herstellung einer Zulaufverbindung 30 mit der Hochdruckquelle 22 dem Anheben, das mit den ersten Arbeitskammern 18 kommunizierende zweite Sitzventil 26 durch Herstellung einer Rücklaufverbindung 32 mit dem Hydraulikreservoir 28 dem Absenken der Unterlenker des Dreipunkt-Krafthebers 12.

Bei der Hochdruckquelle 22 handelt es sich vorliegend um eine über eine zugehörige Sensorleitung 34 lastgesteuerte Hochdruckpumpe 36, die mit aus dem Hydraulikreservoir 28 angesaugter Hydraulikflüssigkeit versorgt wird. Die notwendige Druckentlastung der Sensorleitung 34 erfolgt konventionell über die Hochdruckquelle 22 und ist hier nicht näher dargestellt.

Zur Vermeidung überlastbedingter Druckspitzen in den ersten Arbeitskammern 18 der Hydraulikzylinder 16 kommunizieren diese mit einem Druckbegrenzungsventil 38, mittels dessen sich die beiden Sitzventile 24, 26 in Richtung des Hydraulikreservoirs 28 überbrücken lassen. Ist ein Druckschwellenwert in der Größenordnung von typischerweise 230 bis 250 bar überschritten, so leitet das Druckbegrenzungsventil 38 die in den Kolbenkammern 18 befindliche Hydraulikflüssigkeit in Richtung des Hydraulikreservoirs 28 bis zum Unterschreiten des Druckschwellenwerts ab. Des Weiteren ist ein Einwegventil 40 vorgesehen, das sich in der Zulaufverbindung 30 zwischen dem ersten Sitzventil 24 und den ersten Arbeitskammern 18 der Hydraulikzylinder 16 befindet. Das Einwegventil 40 schließt ein plötzliches Absacken der Unterlenker beim Öffnen des ersten Sitzventils 24 aufgrund eines auf Seiten der Hochdruckquelle 22 herrschenden Druckdefizits aus.

Zur Ansteuerung der beiden Sitzventile 24, 26 ist eine elektromotorisch angetriebene Exzenterscheibe 42 vorgesehen, mittels derer sich wahlweise das eine oder das andere der beiden Sitzventile 24, 26 entgegen einer rückstellenden Federkraft in eine jeweils geöffnete Stellung drängen lässt.

Wie sich ferner Fig. 1 entnehmen lässt, ist jedem der beiden Sitzventile 24, 26 bezüglich seiner jeweiligen Durchflussrichtung 44, 46 ein Druckkompensationsventil 48, 50 vorgeschaltet. Auf diese Weise ist gewährleistet, dass der durch die Sitzventile 24, 26 hindurchtretende Volumenstrom der Hydraulikflüssigkeit und damit die Verfahrgeschwindigkeit der Hydraulikzylinder 16 im Wesentlichen konstant bleibt und ausschließlich vom momentanen Betätigungszustand des betreffenden Sitzventils 24, 26 abhängt.

Beispielsgemäß ist jedes der Druckkompensationsventile 48, 50 durch ein Druckregelventil 52, 54 gebildet, das einen am betreffenden Sitzventil 24, 26 auslassseitig anliegenden Hydraulikdruck mit einem an diesem einlassseitig anliegenden Hydraulikdruck vergleicht und auf einen festen Differenzdruck einstellt. Druckkompensationsventil 48, 50 und Sitzventil 24, 26 können hierbei in eine gemeinsame Ventilbaugruppe integriert sein.

Vorliegend handelt es sich um doppeltwirkende Hydraulikzylinder 16 mit jeweiligen zweiten Arbeitskammern 56 (sog. Drücckammern), die hydraulisch parallel verschaltet mit einer Steuerventilanordnung 58 verbunden sind, mittels derer in den zweiten Arbeitskammern 56 ein vorgegebener Zieldruck einstellbar ist.

Durch entsprechende Vorgabe des Zieldrucks ist es möglich, mittels der Hydraulikzylinder 16 eine nach unten wirkende Kraft auf die beiden Unterlenker auszuüben, falls das zweite Sitzventil 26 sich in seiner geöffneten Stellung befindet.

Dies erlaubt es bei gewissen landwirtschaftlichen Anwendungen, wie beispielsweise beim Grubbern oder Pflügen, den seitens des Anbaugeräts ausgeübten Anpressdruck gezielt zu erhöhen, sofern das Gewicht des Anbaugeräts zur Erzielung eines gewünschten Bodenbearbeitungsergebnisses alleine nicht ausreichend ist. Ebenfalls denkbar ist es, durch geeignete Vorgabe bzw. Variation des Zieldrucks das Anbaugerät entlang einer definierten Oberflächenkontur zu führen sowie einer dabei auftretenden Neigung des Anbaugeräts zum "Aufschwimmen" entgegenzuwirken. Dies ist zum Beispiel beim Verteilen von Erntegut in einem Flachsilo oder beim Räumen von Schnee mittels eines Schiebeschilds von Bedeutung.

Entsprechend der in Fig. 1 gezeigten Ausgestaltung der Steuerventilanordnung 58 weist diese ein 3/2-Wege-Pilotventil 60 mit einem Auslass 62 zur Bereitstellung eines dem vorgegebenen Zieldruck entsprechenden Stelldrucks auf. Das 3/2-Wege-Pilotventil 60 ist zur Bereitstellung des dem vorgegebenen Zieldruck entsprechenden Stelldrucks mittels eines elektrischen Aktors 64 in eine den Auslass 62 mit der Hochdruckquelle 22 verbindende erste Stellung 66a und durch Rückführung des Stelldrucks bzw. des in den zweiten Arbeitskammern 56 hervorgerufenen Arbeitsdrucks über einen Steuereingang 68 in entgegengesetzter Ventilbetätigungsrichtung in eine den Auslass 62 mit dem Hydraulikreservoir 28 verbindende zweite Stellung 66b drängbar. Die Ansteuerung des elektrischen Aktors 64 erfolgt auf Veranlassung eines dem gewünschten Zieldruck entsprechenden Aktorsignals. Sollen die doppeltwirkenden Hydraulikzylinder 16 einfachwirkend arbeiten, bleibt der elektrische Aktor 64 hingegen inaktiv. Dadurch werden die zweiten Arbeitskammern 56 der Hydraulikzylinder 16 unmittelbar mit dem Hydraulikreservoir 28 verbunden. Gleiches gilt für den Fall, dass das erste Sitzventil 24 geöffnet oder beide Sitzventile 24, 26 geschlossen sind, um zu verhindern, dass die Hydraulikzylinder 16 blockiert werden bzw. es zu einem unkontrollierten Druckanstieg bzw. -aufbau in den zweiten Arbeitskammern 56 kommt.

Ausgehend von Fig. 1 dient der am Auslass 62 des 3/2-Wege-Pilotventils 60 bereitgestellte Stelldruck zur unmittelbaren Druckbeaufschlagung der zweiten Arbeitskammern 56 der Hydraulikzylinder 16. Zur Erzielung ausreichend hoher Verfahrgeschwindigkeiten der Hydraulikzylinder 16 muss dieses entsprechend hohe Durchflussraten zulassen, was letztlich zu einer Ventilbauweise mit vergleichsweise großen Abmessungen wie auch zu einer erhöhten Leistung des zu seiner Betätigung erforderlichen elektrischen Aktors 64 führt.

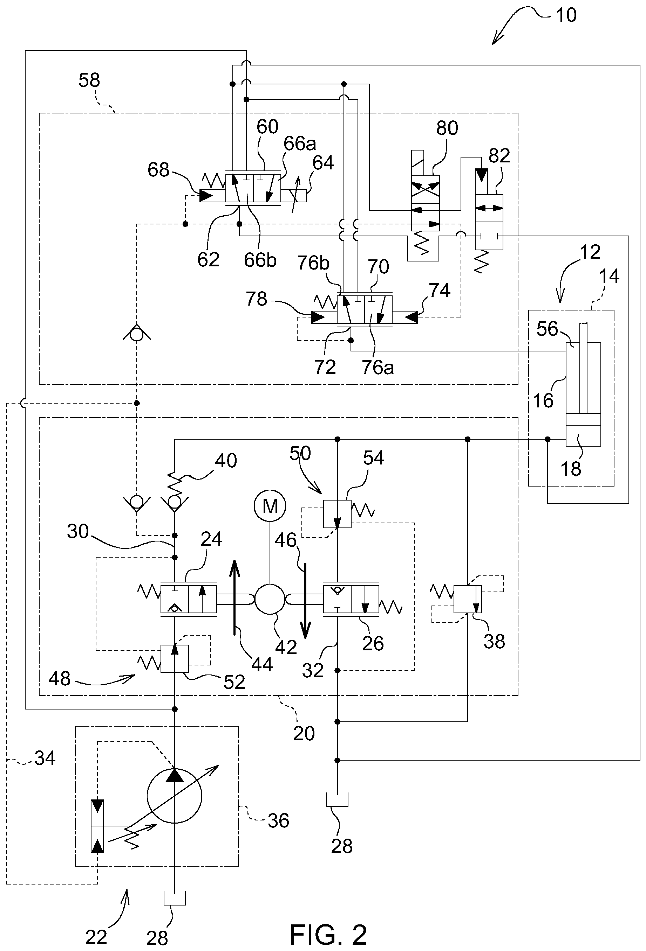

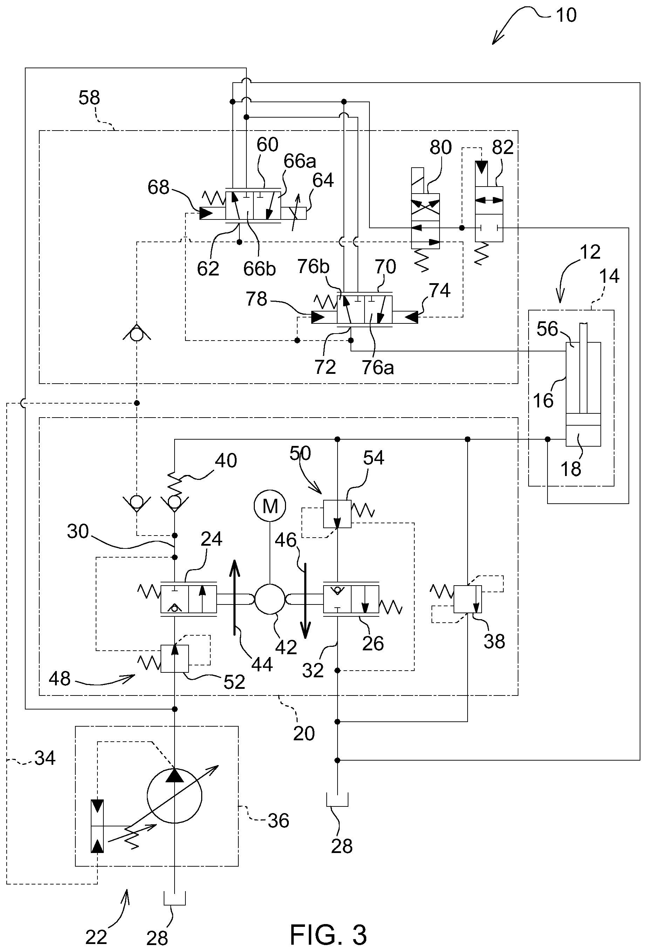

Eine kosten- und bauraumoptimierte Umsetzung der Steuerventilanordnung 58 ist im Rahmen der beiden Varianten gemäß Fig. 2 bzw. 3 erzielbar. Es ist jeweils zusätzlich ein 3/2-Wege-Hauptventil 70 vorgesehen, das einen mit den zweiten Arbeitskammern 56 der Hydraulikzylinder 16 kommunizierenden weiteren Auslass 72 aufweist, wobei mittels des von dem 3/2-Wege-Pilotventil 60 bereitgestellten Stelldrucks das 3/2-Wege-Hauptventil 70 über einen ersten Steuereingang 74 in eine den weiteren Auslass 72 mit der Hochdruckquelle 22 verbindende erste Stellung 76a und durch Rückführung des in den zweiten Arbeitskammern 56 hervorgerufenen Arbeitsdrucks über einen zweiten Steuereingang 78 in entgegengesetzter Ventilbetätigungsrichtung in eine den weiteren Auslass 72 mit dem Hydraulikreservoir 28 verbindende zweite Stellung 76b drängbar ist. Mit anderen Worten dient das mit dem elektrischen Aktor 64 ausgestattete 3/2-Wege-Pilotventil 60 hier lediglich der Vorsteuerung des 3/2-Wege-Hauptventils 70, sodass an ersteres bezüglich der zu erzielenden Durchflussraten keine besonderen Anforderungen gestellt werden. Das 3/2-Wege-Pilotventil 60 fällt daher vergleichsweise kompakt bzw. kostengünstig aus. Gleiches gilt für das 3/2-Wege-Hauptventil 70, da dieses über die beiden Steuereingänge 74, 78 auf rein hydraulischem Wege betätigt wird.

Wie zu erkennen ist, unterscheiden sich die Varianten lediglich hinsichtlich der Art und Weise der Druckrückführung auf den Steuereingang 68 des 3/2-Wege-Pilotventils 60. So wird entsprechend Fig. 2 der am Auslass 62 des 3/2-Wege-Pilotventils 60 anliegenden Stelldruck unmittelbar auf dessen Steuereingang 68 rückgeführt, wohingegen entsprechend Fig. 3 eine Rückführung des in den zweiten Arbeitskammern 56 tatsächlich hervorgerufenen Arbeitsdrucks erfolgt.

Durch die Rückführung des Stelldrucks bzw. des in den zweiten Arbeitskammern 56 hervorgerufenen Arbeitsdrucks wird ein Regelkreis gebildet, in dem sich selbsttätig ein dem jeweiligen Aktorsignal entsprechender Zieldruck einstellt. Eine aufwändige aktive elektrische Druckregelung erübrigt sich damit.

Des Weiteren ist in Zusammenhang mit den beiden vorgenannten Varianten eine Auflagedrucksteuerung am landwirtschaftlichen Traktor 10 verwirklicht. Hierzu umfasst die Steuerventilanordnung 58 ein elektrisch umschaltbares 4/2-Wegeventil 80, mittels dessen der Auslass 62 des 3/2-Wege-Pilotventils 60 statt mit dem ersten Steuereingang 74 des 3/2-Wege-Hauptventils 70 mit den ersten Arbeitskammern 18 der Hydraulikzylinder 16 sowie zugleich der erste Steuereingang 74 des 3/2-Wege-Hauptventils 70 statt mit dem Auslass 62 des 3/2-Wege-Pilotventils 60 mit dem Hydraulikreservoir 28 verbindbar ist. Das Sperrventil 82 stellt dabei sicher, dass eine Verbindung der zweiten Arbeitskammern 56 der Hydraulikzylinder 16 in Richtung des Hydraulikreservoirs 28 unterbrochen wird, falls die Auflagedrucksteuerung nicht aktiv ist, was vorliegend der Fall ist, wenn sich das 4/2-Wegeventil 80 in seiner unbetätigten Grundstellung befindet. Das Sperrventil 82 nimmt seine geöffnete Stellung ein, sobald über das 4/2-Wegeventil 80 eine Verbindung zum Auslass 62 des 3/2-Wege-Pilotventils 60 hergestellt ist und dort ein bestimmter Mindestdruck erreicht wird, der typischerweise 5 bis 10 bar beträgt.

Für die Verschaltung des Sperrventils 82 mit dem 4/2-Wegeventil 80 sind unterschiedliche Ausgestaltungen vorgesehen. Eine im Fig. 2 dargestellte erste Ausgestaltung sieht vor, den Auslass 62 des 3/2-Wege-Pilotventils 60 unmittelbar mit dem Sperrventil 82 zu verbinden. Das 4/2-Wegeventil 80 dient hier ausschließlich der Betätigung des Sperrventils 82. Entsprechend einer in Fig. 3 wiedergegebenen zweiten Ausgestaltung ist ebenfalls der Auslass 62 des 3/2-Wege-Pilotventils 60 über das 4/2-Wegeventil 80 mit dem Sperrventil 82 verbunden. Die erste Ausgestaltung führt gegenüber der zweiten zu geringeren Druckverlusten, erlaubt zudem eine kompaktere Bauweise des 4/2-Wegeventils 80. Die vorstehende Beschreibung ist dabei insofern lediglich beispielhaft zu verstehen, als sich beide Ausgestaltungen in Verbindung mit der ersten und zweiten Variante der Steuerventilanordnung 58 gleichermaßen verwenden lassen.

## Patentansprüche

1. Anordnung zur Steuerung eines hydraulischen Dreipunkt-Krafthebers, umfassend einen Hydraulikzylinder (16) mit einer Arbeitskammer (18), die zur Veränderung der Hubstellung eines von dem hydraulischen Dreipunkt-Kraftheber (12) umfassten Unterlenkers mit unter Druck stehender Hydraulikflüssigkeit beaufschlagbar ist, sowie mit der Arbeitskammer (18) kommunizierende erste und zweite Sitzventile (24, 26), wobei das erste Sitzventil (24) zur Herstellung einer Zulaufverbindung (30) mit einer Hochdruckquelle (22) und das zweite Sitzventil (26) zur Herstellung einer Rücklaufverbindung (32) mit einem Hydraulikreservoir (28) ausgebildet ist, **dadurch gekennzeichnet, dass** es sich um einen doppeltwirkenden Hydraulikzylinder (16) mit einer weiteren Arbeitskammer (56) handelt, die mit einer Steuerventilanordnung (58) verbunden ist, mittels derer in der weiteren Arbeitskammer (56) ein vorgegebener Zieldruck einstellbar ist.

2. Anordnung nach Anspruch 1, **dadurch gekennzeichnet, dass** die Steuerventilanordnung (58) ein 3/2-Wege-Pilotventil (60) mit einem Auslass (62) zur Bereitstellung eines dem vorgegebenen Zieldruck entsprechenden Stelldrucks aufweist, wobei das 3/2-Wege-Pilotventil (60) zur Bereitstellung des dem vorgegebenen Zieldruck entsprechenden Stelldrucks mittels eines elektrischen Aktors (64) in eine den Auslass (62) mit der Hochdruckquelle (22) verbindende erste Stellung (66a) und durch Rückführung des Stelldrucks oder des in der weiteren Arbeitskammer (56) hervorgerufenen Arbeitsdrucks über einen Steuereingang (68) in entgegengesetzter Ventilbetätigungsrichtung in eine den Auslass (62) mit dem Hydraulikreservoir (28) verbindende zweite Stellung (66b) drängbar ist.

3. Anordnung nach Anspruch 2, **dadurch gekennzeichnet, dass** der am Auslass (62) des 3/2-Wege-Pilotventils (60) bereitgestellte Stelldruck zur unmittelbaren Druckbeaufschlagung der weiteren Arbeitskammer (56) des Hydraulikzylinders (16) dient.

4. Anordnung nach Anspruch 2, **dadurch gekennzeichnet, dass** ein 3/2-Wege-Hauptventil (70) vorgesehen ist, das einen mit der weiteren Arbeitskammer (56) des Hydraulikzylinders (16) kommunizierenden weiteren Auslass (72) aufweist, wobei mittels des von dem 3/2-Wege-Pilotventil (60) bereitgestellten Stelldrucks das 3/2-Wege-Hauptventil (70) über einen ersten Steuereingang (74) in eine den weiteren Auslass (72) mit der Hochdruckquelle (22) verbindende erste Stellung (76a) und durch Rückführung des in der weiteren Arbeitskammer (56) hervorgerufenen Arbeitsdrucks über einen zweiten Steuereingang (78) in entgegengesetzter Ventilbetätigungsrichtung in eine den weiteren Auslass (72) mit dem Hydraulikreservoir (28) verbindende zweite Stellung (76b) drängbar ist.

5. Anordnung nach Anspruch 4, **dadurch gekennzeichnet, dass** die Steuerventilanordnung (58) ein 4/2-Wegeventil (80) umfasst, mittels dessen der Auslass (62) des 3/2-Wege-Pilotventils (60) statt mit dem ersten Steuereingang (74) des 3/2-Wege-Hauptventils (70) mit der Arbeitskammer (18) des Hydraulikzylinders (16) sowie zugleich der erste Steuereingang (74) des 3/2-Wege-Hauptventils (70) statt mit dem Auslass (62) des 3/2-Wege-Pilotventils (60) mit dem Hydraulikreservoir (28) verbindbar ist.

6. Anordnung nach wenigstens einem der vorhergehenden Ansprüche, **dadurch gekennzeichnet, dass** jedem der beiden Sitzventile (24, 26) bezüglich seiner jeweiligen Durchflussrichtung (44, 46) ein Druckkompensationsventil (48, 50) vorgeschaltet ist.

7. Landwirtschaftlicher Traktor mit einem Dreipunkt-Kraftheber (12) sowie mit einer Anordnung (10) zur Steuerung des hydraulischen Dreipunkt-Krafthebers (12) nach wenigstens einem der vorhergehenden Ansprüche.

## Claims

1. Arrangement for controlling a hydraulic three-point hitch, comprising a hydraulic cylinder (16) with a working chamber (18), to which pressurized hydraulic fluid can be admitted to change the lifting position of a lower arm comprised by the hydraulic three-point hitch (12), and also first and second seat valves (24, 26) communicating with the working chamber (18), the first seat valve (24) being designed for producing a flow connection (30) to a high-pressure source (22) and the second seat valve (26) being designed for producing a return connection (32) to a hydraulic reservoir (28), **characterized in that** it involves a double-acting hydraulic cylinder (16) with a further working chamber (56), which is connected to a control valve arrangement (58) by means of which a specified target pressure can be set in the further working chamber (56).

2. Arrangement according to Claim 1, **characterized in that** the control valve arrangement (58) has a 3/2-way pilot valve (60) with an outlet (62) for providing an adjusting pressure corresponding to the specified target pressure, wherein, for providing the adjusting pressure corresponding to the specified target pressure, the 3/2-way pilot valve (60) can be pushed by means of an electrical actuator (64) into a first position (66a), connecting the outlet (62) to the high-pressure source (22), and, by feeding back the adjusting pressure or the working pressure induced in the further working chamber (56) by way of a control input (68), can be pushed in the opposite valve actuating direction into a second position (66b), connecting the outlet (62) to the hydraulic reservoir (28).

3. Arrangement according to Claim 2, **characterized in that** the adjusting pressure provided at the outlet (62) of the 3/2-way pilot valve (60) serves for directly pressurizing the further working chamber (56) of the hydraulic cylinder (16).

4. Arrangement according to Claim 2, **characterized in that** a 3/2-way main valve (70) is provided, which has a further outlet (72) communicating with the further working chamber (56) of the hydraulic cylinder (16), wherein the 3/2-way main valve (70) can be pushed by means of the adjusting pressure provided by the 3/2-way pilot valve (60) by way of a first control input (74) into a first position (76a), connecting the further outlet (72) to the high-pressure source (22), and, by feeding back the working pressure induced in the further working chamber (56) by way of a second control input (78), can be pushed in the opposite valve actuating direction into a second position (76b), connecting the further outlet (72) to the hydraulic reservoir (28).

5. Arrangement according to Claim 4, **characterized in that** the control valve arrangement (58) comprises a 4/2-way valve (80), by means of which the outlet (62) of the 3/2-way pilot valve (60) can be connected to the working chamber (18) of the hydraulic cylinder (16) instead of to the first control input (74) of the 3/2-way main valve (70) and at the same time the first control input (74) of the 3/2-way main valve (70) can be connected to the hydraulic reservoir (28) instead of to the outlet (62) of the 3/2-way pilot valve (60).

6. Arrangement according to at least one of the preceding claims, **characterized in that** a pressure compensation valve (48, 50) is connected upstream of each of the two seat valves (24, 26) with respect to its respective through-flow direction (44, 46).

7. Agricultural tractor with a three-point hitch (12) and also with an arrangement (10) for controlling the hydraulic three-point hitch (12) according to at least one of the preceding claims.

## Revendications

1. Agencement pour commander un attelage hydraulique à trois points, comprenant un vérin hydraulique (16) ayant une chambre de travail (18) qui est apte à être alimentée en fluide hydraulique sous pression pour modifier la position de levage d'un bras inférieur que comprend par l'attelage hydraulique à trois points (12), ainsi que des première et deuxième vannes à siège (24, 26) communiquant avec la chambre de travail (18), la première vanne à siège (24) étant conçue pour établir une liaison d'alimentation (30) avec une source haute pression (22) et la deuxième vanne à siège (26) étant conçue pour établir une liaison de retour (32) avec un réservoir hydraulique (28), **caractérisé en ce qu'**il s'agit d'un vérin hydraulique à double effet (16) ayant une autre chambre de travail (56) reliée à un dispositif (58) formant vanne de commande permettant de régler une pression de consigne prédéfinie dans ladite autre chambre de travail (56).

2. Agencement selon la revendication 1, **caractérisé en ce que** le dispositif (58) formant vanne de commande comprend une vanne pilote à 3/2 voies (60) ayant une sortie (62) pour fournir une pression de commande correspondant à la pression de consigne prédéfinie, la vanne pilote à 3/2 voies (60) étant actionnée par un actionneur électrique (64) dans une première position (66a) reliant la sortie (62) à la source haute pression (22), afin de fournir la pression de commande correspondant à la pression de consigne prédéfinie, et étant actionnée, dans le sens inverse de l'actionnement de la vanne, dans une deuxième position (66b) reliant la sortie (62) au réservoir hydraulique (28), par le retour de la pression de commande ou de la pression de travail générée dans ladite autre chambre de travail (56) via une entrée de commande (68).

3. Agencement selon la revendication 2, **caractérisé en ce que** la pression de commande fournie à la sortie (62) de la vanne pilote à 3/2 voies (60) sert à alimenter directement en pression ladite autre chambre de travail (56) du vérin hydraulique (16).

4. Agencement selon la revendication 2, **caractérisé en ce qu'**il est prévu une vanne principale à 3/2 voies (70) qui comprend une autre sortie (72) communiquant avec ladite autre chambre de travail (56) du vérin hydraulique (16), la pression de commande fournie par la vanne pilote 3/2 voies (60) permettant d'actionner la vanne principale 3/2 voies (70) dans une première position (76a), reliant la sortie supplémentaire (72) à la source haute pression (22) via une première entrée de commande (74), et, dans le sens opposé à l'actionnement de la vanne, dans une deuxième position (76b), reliant ladite autre sortie (72) au réservoir hydraulique (28), par le retour de la pression de travail générée dans ladite autre chambre de travail (56) par l'intermédiaire d'une deuxième entrée de commande (78).

5. Agencement selon la revendication 4, **caractérisé en ce que** l'agencement de vanne de commande (58) comprend une vanne à 4/2 voies (80), au moyen de laquelle la sortie (62) de la vanne pilote à 3/2 voies (60) est apte à être reliée à la chambre de travail (18) du vérin hydraulique (16) au lieu de la première entrée de commande (74) de la vanne principale à 3/2 voies (70), et la première entrée de commande (74) de la vanne principale à 3/2 voies (70) est apte à être reliée au réservoir hydraulique (28) au lieu de la sortie (62) de la vanne pilote à 3/2 voies (60).

6. Agencement selon au moins une des revendications précédentes, **caractérisé en ce qu'**une vanne de compensation de pression (48, 50) est montée en amont de chacune des deux vannes à siège (24, 26) par rapport à leur sens d'écoulement respectif (44, 46).

7. Tracteur agricole avec un attelage à trois points (12) ainsi qu'avec un agencement (10) pour commander l'attelage à trois points hydraulique (12), selon l'une des revendications précédentes.
